# EUROPEAN PATENT APPLICATION

(11) **EP 4 524 870 A1**
(43) Date of publication of application: **19.03.2025**
(21) Application number: 23887144.6
(22) Date of filing: 20.11.2023
(51) Int. Cl.: G06Q 50/20, G06Q 50/10, G09B 19/06, G06T 13/80

(54) **SYSTEM AND METHOD FOR PROVIDING FOREIGN LANGUAGE LEARNING USING ANIMATION**

(30) Priority: 15.11.2023 KR 20230158560
(71) Applicant: Kim, Sang Won, Seoul 08824 (KR)
(72) Inventor: Kim, Sang Won, Seoul 08824 (KR)
(74) Representative: Sander, Rolf
(86) International application number: PCT/KR2023/018636
(87) International publication number: WO 2025/023385

(57) **Abstract**

A system for providing foreign language learning using animation according to the present invention includes a data storage unit that stores learning data including learning sentences and learning words for a foreign language and animation data corresponding to the learning data, a learning mode determination unit that determines which one of a sentence learning mode or a word learning mode a current learning mode selected by a learner terminal owned by a learner is, a learning data extraction unit that selects and loads the learning sentences or the learning words from the data storage unit to correspond to learning setting of the learning mode determined by the learning mode determination unit, an animation extraction unit that selects and loads animation data corresponding to the learning sentences or the learning words loaded by the learning data extraction unit, and a learning video providing unit that displays the learning sentences or the learning words loaded by the learning data extraction unit and the animation data loaded by the animation extraction unit on the learner terminal according to preset expression setting.

## Description

### [Technical Field]

The present invention relates to a system and method for providing foreign language learning, and more particularly, to a system and method for providing foreign language learning capable of maximizing learning effects by allowing a learner to memorize learning sentences, sentence patterns, or learning words as a whole while associating animation using the animation together in a learning process.

### [Background Art]

From the past to the present, many people have a desire to become proficient in a foreign language, and the importance of foreign language learning is further increasing according to the recent trend of internationalization.

Accordingly, a language learning market is also gradually expanding, and various academies and learning provision services that provide unique language learning methods are scattered in the market.

In particular, English, languages of many European countries, and isolated languages such as Chinese have an overwhelming international influence compared to other foreign languages, and occupy absolute positions as source languages that form the basis of modern world civilization and technology.

The isolated language is a language in which the relationship between words is determined depending on a position (word order) in a sentence, and refers to a language in which the word form changes or has no affixes depending on the role in the sentence, and the role (subject/object/verb/complement, etc.) of the word is determined depending on the position of the word in the sentence.

According to the above characteristics, it is most advantageous to learn the isolated language by memorizing the vocabulary and learning the word order, rather than learning thousands of small grammatical details individually.

However, many academies and services related to foreign language learning in Korea are still focused on grammar and testing, and educational courses to improve conversation skills also tend to focus on local memorization and text, so the phenomenon where many people are unable to keep up with the educational process and give up midway occurs frequently.

Therefore, a method for solving these problems is required.

### [Prior Art Document]

### [Patent Document]

(Patent Document 0001) Korean Patent Laid-open Publication No. 10-2022-0135583

### [Disclosure]

### [Technical Problem]

The present invention is devised to solve the problems of the related art described above, and an object of the present invention is to enable a learner to naturally memorize foreign language sentence patterns through animations and stories related thereto and continuously maintain his/her interest in foreign language learning.

Problems of the present invention are not limited to the above-described problems, and other problems that are not described may be obviously understood by those skilled in the art from the following description.

### [Technical Solution]

According to an aspect of the present invention, a system for providing foreign language learning using animation includes a data storage unit that stores learning data including learning sentences and learning words for a foreign language and animation data corresponding to the learning data, a learning mode determination unit that determines which one of a sentence learning mode or a word learning mode a current learning mode selected by a learner terminal owned by a learner is, a learning data extraction unit that selects and loads the learning sentences or the learning words from the data storage unit to correspond to learning setting of the learning mode determined by the learning mode determination unit, an animation extraction unit that selects and loads animation data corresponding to the learning sentences or the learning words loaded by the learning data extraction unit, and a learning video providing unit that displays the learning sentences or the learning words loaded by the learning data extraction unit and the animation data loaded by the animation extraction unit on the learner terminal according to preset expression setting.

The learning setting of the sentence learning mode may include at least one of phrase division setting that provides a standard for dividing the learning sentences into a plurality of phrases having a semantic unit, expression order setting that determines an expression order of a plurality of phrases divided by the phrase division setting, animation setting that allocates animation data corresponding to each of the plurality of divided phrases, and effect setting that determines an effect to be assigned to the animation data allocated to each of the plurality of phrases according to the animation setting.

The learning setting of the word learning mode may include at least one of related word setting that sets a related word set that is a combination of random learning words and other learning words with a preset degree of relationship, expression order setting that determines an expression order of learning words included in the related word set, animation setting that allocates animation data corresponding to each learning word included in the related word set, and effect setting that determines an effect to be assigned to the animation data allocated to each learning word according to the animation setting.

The expression setting may be set to sequentially perform a pre-guidance process of displaying the learning sentences or the learning words loaded by the learning data extraction unit on the learner terminal, a learning process of combining the learning sentences or the learning words loaded by the learning data extraction unit and the animation data loaded by the animation extraction unit and displaying the combined learning sentences or learning words and animation data on the learner terminal, and a post-guidance process of re-displaying the learning sentences or the learning words loaded by the learning data extraction unit on the learner terminal.

According to another aspect of the present invention, a method for providing foreign language learning using animation includes step (a) of determining, by a learning mode determination unit, which one of a sentence learning mode or a word learning mode a current learning mode selected by a learner terminal owned by a learner is, step (b) of selecting and loading, by a learning data extraction unit, the learning sentences or the learning words from the data storage unit to correspond to learning setting of the learning mode determined by the learning mode determination unit in the step (a), step (c) of selecting and loading, by an animation extraction unit, animation data corresponding to the learning sentences or the learning words loaded by the learning data extraction unit in the step (b), and step (d) of processing, by the learning video providing unit, the learning sentences or the learning words loaded by the learning data extraction unit in the step (b) and the animation data loaded by the animation extraction unit in the step (c) according to preset expression setting and displaying the processed learning sentences or learning words and animation data on the learner terminal.

In this case, the learning setting of the sentence learning mode may include at least one or more of phrase division setting that provides a standard for dividing the learning sentences into a plurality of phrases having a semantic unit, expression order setting that determines an expression order of a plurality of phrases divided by the phrase division setting, animation setting that allocates animation data corresponding to each of the plurality of divided phrases, and effect setting that determines an effect to be assigned to the animation data allocated to each of the plurality of phrases according to the animation setting.

When the learning mode determined by the learning mode determination unit in the step (a) is a sentence learning mode, in the step (b), the learning data extraction unit may select and load the learning sentences corresponding to a preset learning order from the data storage unit, and the step (d) may be performed in a form of step (d1) of processing, by a learning video providing unit, the learning sentences loaded by the learning data extraction unit in the step (b) and the animation data loaded by the animation extraction unit in the step (c) according to the expression order setting and displaying the processed learning sentences and animation data on the learner terminal.

In this case, the step (d1) may include step (d1-1) of displaying, by the learning video providing unit, the learning sentences loaded by the learning data extraction unit on the learner terminal, step (d1-2) of combining, by the learning video providing unit, the learning sentences loaded by the learning data extraction unit and the animation data loaded by the animation extraction unit and displaying the combined learning sentences and animation data on the learner terminal, and step (d1-3) of re-displaying, by the learning video providing unit, the learning sentences loaded by the learning data extraction unit on the learner terminal.

The step (d1-2) may include step (d1-2-1) of displaying, by the learning video providing unit, an nth phrase (n is a natural number greater than or equal to 1) of the learning sentences loaded by the learning data extraction unit and nth animation data allocated to the nth phrase on the learner terminal, step (d1-2-2) of displaying, by the learning video providing unit, an n+1th phrase of the learning sentences loaded by the learning data extraction unit and n+1th animation data allocated to the n+1th phrase on the learner terminal, step (d1-2-3) of analyzing, by the learning video providing unit, a relationship between the nth phrase and the n+1th phrase, and step (d1-2-4) of assigning, by the learning video providing unit, an effect to at least one of the nth animation data and the n+1th animation data when it is determined that there is the correlation between the nth learning phrase and the n+1th learning phrase according to the analysis result of the step (d2-2-3), and the step (d1-2) may sequentially increase n by the number of times that 1 is subtracted from the number of phrases in the learning sentence and may be performed repeatedly.

Meanwhile, the learning setting of the word learning mode may include at least one or more of related word setting that sets a related word set that is a combination of random learning words and other learning words with a preset degree of relationship, expression order setting that determines an expression order of learning words included in the related word set, animation setting that allocates animation data corresponding to each learning word included in the related word set, and effect setting that determine an effect to be assigned to the animation data allocated to each learning word according to the animation setting.

In this case, when the learning mode determined by the learning mode determination unit in the step (a) is a word learning mode, in the step (b), the learning data extraction unit may select and load the related word set corresponding to a preset learning order from the data storage unit, and the step (d) may be performed in a form of step (d2) of processing, by the learning video providing unit, each learning word of the related word set loaded by the learning data extraction unit in the step (b) and the animation data loaded by the animation extraction unit in the step (c) according to the expression order setting and displaying the processed learning word and animation data on the learner terminal.

The step (d2) may include step (d2-1) of displaying, by the learning video providing unit, each learning word of the related word set loaded by the learning data extraction unit on the learner terminal, step (d2-2) of combining, by the learning video providing unit, each learning word of the related word set loaded by the learning data extraction unit and the animation data loaded by the animation extraction unit and displaying the combined learning word and animation data on the learner terminal, and step (d2-3) of re-displaying, by the learning video providing unit, each learning word of the related word set loaded by the learning data extraction unit on the learner terminal.

The step (d2-2) may include step (d2-2-1) of displaying, by the learning video providing unit, an nth learning word (n is a natural number greater than or equal to 1) of the related word set loaded by the learning data extraction unit and nth animation data allocated to the nth learning word on the learner terminal, step (d2-2-2) of displaying, by the learning video providing unit, an n+1th learning word of the related word set loaded by the learning data extraction unit and n+1th animation data allocated to the n+1th learning word on the learner terminal, step (d2-2-3) of analyzing, by the learning video providing unit, a correlation between the nth learning word and the n+1th learning word, and step (d2-2-4) of assigning an effect to at least one of the nth animation data and the n+1th animation data when the learning video providing unit determines that there is the relationship between the nth learning word and the n+1th learning word according to the analysis result of the step (d2-2-3), and the step (d2-2) may sequentially increase n by the number of times that 1 is subtracted from the number of learning words constituting the related word set and is performed repeatedly.

### [Advantageous Effects]

According to a system and method for providing foreign language learning using animation of the present invention to solve the above problems, by expressing phrases or words of sentences of major languages using animation, it is possible for a learner to intuitively understand the meaning of sentences or words at the moment the learner listens to an explanation while watching the animation and at the same time, to naturally memorize the sentences or words.

In particular, according to the present invention, by using animation, it is possible for a learner to understand not only the simple meaning of words, but also the nuances and context of use of sentences and words.

In addition, according to the present invention, by combining several foreign language sentence patterns and words into one story and allowing a learner to maintain and accelerate his/her learning interest as stories unfold, it is possible for the learner to learn several patterns at once and to remember what he/she have learned in his/her memory for a long time.

The effects of the present invention are not limited to the above-described effects, and other effects that are not described may be obviously understood by those skilled in the art from the claims.

### [Brief Description of Drawings]

FIG. 1 is a diagram schematically illustrating each configuration of a system for implementing a method for providing foreign language learning using animation according to an embodiment of the present invention.
FIG. 2 is a diagram illustrating the entire process of a method for providing foreign language learning using animation according to an embodiment of the present invention.
FIG. 3 is a diagram illustrating a classification of step (d) in the method for providing foreign language learning using animation according to an embodiment of the present invention.
FIG. 4 is a diagram illustrating a detailed process of step (d1) in the method for providing foreign language learning using animation according to an embodiment of the present invention.
FIG. 5 is a diagram illustrating a detailed process of step (d1-2) in the method for providing foreign language learning using animation according to an embodiment of the present invention.
FIG. 6 is a diagram illustrating an example of a screen displayed on a learner terminal in steps (d1-1) and (d1-3) in the method for providing foreign language learning using animation according to an embodiment of the present invention.
FIG. 7 is a diagram illustrating an example of the screen displayed on the learner terminal in step (d1-2) in the method for providing foreign language learning using animation according to an embodiment of the present invention.
FIG. 8 is a diagram illustrating a detailed process of step (d2) in the method for providing foreign language learning using animation according to an embodiment of the present invention.
FIG. 9 is a diagram illustrating a detailed process of step (d2-2) in the method for providing foreign language learning using animation according to an embodiment of the present invention.
FIG. 10 is a diagram illustrating an example of the screen displayed on the learner terminal in steps (d2-1) and (d2-3) in the method for providing foreign language learning using animation according to an embodiment of the present invention.
FIG. 11 is a diagram illustrating an example of the screen displayed on the learner terminal in step (d2-2) in the method for providing foreign language learning using animation according to an embodiment of the present invention.
FIG. 12 is a diagram illustrating another example of the screen displayed on the learner terminal in step (d2-2) in the method for providing foreign language learning using animation according to an embodiment of the present invention.
FIGS. 13 and 14 are diagrams illustrating examples of screens displayed on a learner terminal for memorizing sentence patterns in the method for providing foreign language learning using animation according to an embodiment of the present invention.
FIG. 15 is a diagram illustrating an example of an appearance that a separate highlighting expression is made for key parts corresponding to animation data among elements included in learning words and learning sentences, in the method for providing foreign language learning using animation according to an embodiment of the present invention.

### [Best Mode]

In this specification, when a component (or region, layer, portion, etc.) is referred to as being "on," "connected to," or "coupled to" another component, it means that the component may be arranged/connected/coupled directly on another component or a third component may be arranged therebetween.

Like reference numerals refer to like elements. In addition, in the drawings, the thicknesses, rates, and dimensions of components are exaggerated for efficient description of technical contents.

"And/or" includes all combinations of one or more that the associated configurations may define.

Terms used in the specification, "first," "second," etc., may be used to describe various components, but the components are not to be interpreted as limited by the terms. The terms are used only to distinguish one component from another component. For example, a first component may be named a second component and the second component may also be similarly named the first component, without departing from the scope of the present disclosure. Singular forms are intended to include plural forms unless the context clearly indicates otherwise.

In addition, terms such as "below," "on lower side," "above," and "on upper side" are used to describe the relationship between components illustrated in the drawings. The above terms are relative concepts and are described based on a direction indicated in the drawings.

Unless defined otherwise, all terms (including technical and scientific terms) used herein have the same meaning as generally understood by one of ordinary skill in the art to which the present invention belongs. In addition, terms such as those defined in commonly used dictionaries should be construed as having meanings consistent with their meanings in the context of the relevant technology, and unless interpreted in an idealized or overly formal meaning, are explicitly defined herein.

It should be further understood that terms "include" or "have" specify the presence of features, numerals, steps, operations, components, parts mentioned in the present specification, or combinations thereof, but do not preclude the presence or addition of one or more other features, numerals, steps, operations, components, parts, or combinations thereof.

In addition, in this specification, when it is mentioned that a first component is operated or executed on a second component (ON), the first component should be understood as operating or being executed in an environment in which the second component operates or is executed, or operating or being executed through direct or indirect interaction with the second component.

When any component, device, or system is stated as including components composed of programs or software, even if not explicitly stated, the component, device, or system should be understood as including any hardware (e.g., memory, CPU, etc.) or other programs or software (e.g., driver or the like needed to run the operating system or hardware.) necessary for the programs or software to run or operate.

In addition, unless otherwise specified, it should be understood that any component may be implemented in any form of software, hardware, or both software and hardware.

In addition, terms used in the present specification are for explaining exemplary embodiments rather than limiting the present invention. Unless otherwise stated, a singular form includes a plural form in the present specification. Throughout this specification, the term "comprise" and/or "comprising" does not exclude the presence or addition of one or more other components.

In addition, in this specification, terms such as "unit" and "device" may be intended to refer to the functional and structural combination of hardware and software driven by or for driving the hardware. For example, the hardware here may be a data processing device including a CPU or other processor. In addition, software driven by hardware may refer to a running process, object, executable file, thread of execution, program, etc.

In addition, the above terms may mean a logical unit of hardware resources for executing a predetermined code and the predetermined code, and it can be easily inferred by an average expert in the technical field of the present invention that the above terms do not necessarily mean a physically connected code or a single type of hardware.

In addition, the present invention may be provided in the form of a storage medium in which a computer-readable program is recorded so that a learner can run the program independently through a learner terminal, or may be in the form of providing each process to the learner terminal online through an operation server.

Hereinafter, specific technical details to be implemented in the present invention will be described in detail with reference to the accompanying drawings.

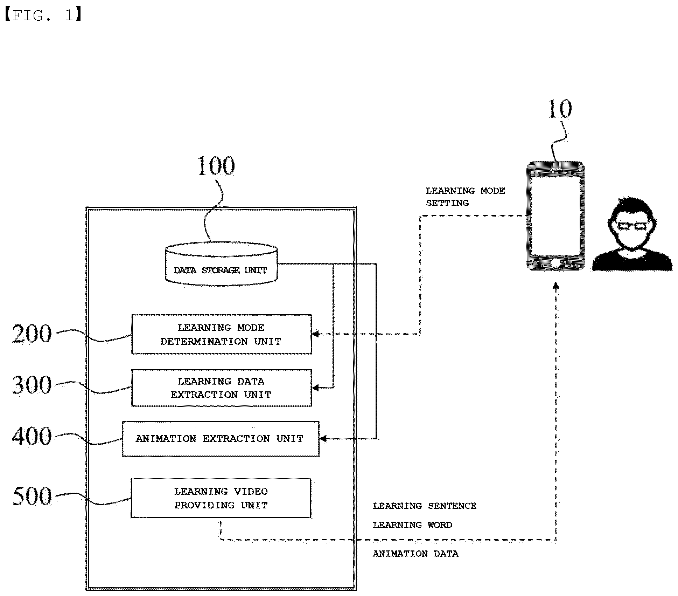

FIG. 1 is a diagram schematically illustrating each configuration of a system for implementing a method for providing foreign language learning using animation according to an embodiment of the present invention.

Each configuration illustrated in FIG. 1 indicates that it may be separated functionally and logically, but an average expert in the technical field of the present invention can easily infer that each configuration does not necessarily mean that each configuration is divided into a separate physical device or written in a separate code.

In addition, in the following description of the present invention, it is exemplified that a foreign language applied to the learning process in the present embodiment is English, but the present invention is not limited to English and may of course be applied to any language.

As illustrated in FIG. 1, a method for providing foreign language learning using animation according to an embodiment of the present invention includes a data storage unit 100, a learning mode determination unit 200, a learning data extraction unit 300, and animation extraction unit 400, and a learning video providing unit 500.

The data storage unit 100 is provided to store learning data including learning sentences and learning words for a foreign language, and animation data corresponding to the learning data.

This is a process of determining, by the learning mode determination unit 200, which one of a sentence learning mode or a word learning mode a current learning mode selected by the learner terminal 10 owned by a learner is.

In other words, the learner may select which learning mode to learn through the learner terminal 10 owned by the learner, and the learning mode determination unit 200 determines which mode the learning mode selected by the learner terminal 10 is.

The learning data extraction unit 300 serves to select and load learning sentences or learning words from the data storage unit 100 to correspond to the learning settings of the learning mode determined by the learning mode determination unit 200.

The animation extraction unit 400 serves to select and load animation data corresponding to the learning sentences or learning words loaded by the learning data extraction unit 300.

That is, the corresponding animation data may be set for each learning sentence and learning word, which will be described later.

The learning video providing unit 500 displays the learning sentences or the learning words loaded by the learning data extraction unit 300 and the animation data loaded by the animation extraction unit 400 on the learner terminal 10 according to preset expression setting.

Accordingly, the learner may perform the language learning process by visually confirming the animation displayed along with the learning sentences or learning words through the learner terminal 10.

Hereinafter, a method of providing foreign language learning performed through the system for providing foreign language learning will be described in detail. In the following description, symbols assigned to each component are based on FIG. 1.

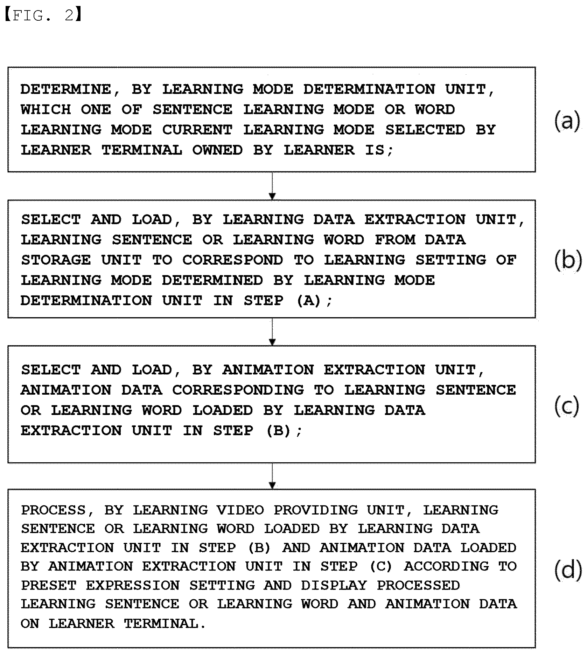

FIG. 2 is a diagram illustrating the entire process of a method for providing foreign language learning using animation according to an embodiment of the present invention.

As illustrated in FIG. 2, the method for providing foreign language learning using animation according to an embodiment of the present invention may include steps (a) to (d).

Step (a) is a process of determining, by the learning mode determination unit 200, which one of a sentence learning mode or a word learning mode a current learning mode selected by the learner terminal 10 owned by a learner is.

In other words, prior to the process, the learner selects a learning mode to learn through the learner terminal 10 owned by the learner, and in step (a), the learning mode determination unit 200 determines which mode of the sentence learning mode or the word learning mode the learning mode selected by the learner terminal 10 is.

Step (b) is a process of selecting and loading, by the learning data extraction unit 300, the learning sentences or learning words from the data storage unit 100 to correspond to the learning settings of the learning mode determined by the learning mode determination unit 200 in step (a).

In this process, when the learning mode is the sentence learning mode, the learning data extraction unit 300 selects and loads the learning sentence corresponding to the preset learning order from the data storage unit 100.

Alternatively, in this process, when the learning mode is the word learning mode, the learning data extraction unit 300 selects and loads one or more learning words corresponding to a preset learning order from the data storage unit 100.

In this case, the preset learning setting of the sentence learning mode may include at least one of phrase division setting that provides a standard for dividing the learning sentences into a plurality of phrases having a semantic unit, expression order setting that determines an expression order of a plurality of phrases divided by the phrase division setting, animation setting that allocates animation data corresponding to each of the plurality of divided phrases, and effect setting that determines an effect to be assigned to the animation data allocated to each of the plurality of phrases according to the animation setting.

That is, for each learning sentence, the phrase division settings, the expression order setting, the animation setting, and the effect setting may be assigned, respectively.

The preset learning setting of the word learning mode may include at least one or more of related word setting that sets a related word set that is a combination of random learning words and other learning words with a preset degree of relationship, expression order setting that determines an expression order of learning words included in the related word set, animation setting that allocates animation data corresponding to each learning word included in the related word set, and effect setting that determine an effect to be assigned to the animation data allocated to each learning word according to the animation setting.

That is, for each learning word, the related word settings, the expression order setting, the animation setting, and the effect setting may be assigned, respectively.

Next, step (c) is a process of selecting and loading, by the animation extraction unit 400, the animation data corresponding to the learning sentences or learning words loaded by the learning data extraction unit 300 in step (b).

In this step (c), the animation extraction unit 400 loads and prepares the corresponding animation data according to the animation setting and effect settings assigned to the sentence learning mode or word learning mode.

Next, step (d) is a process of processing, by the learning video providing unit 500, the learning sentences or the learning words loaded by the learning data extraction unit 300 in step (b) and the animation data loaded by the animation extraction unit 400 in step (c) according to preset expression setting and displaying the processed learning sentences or learning words and animation data on the learner terminal 10.

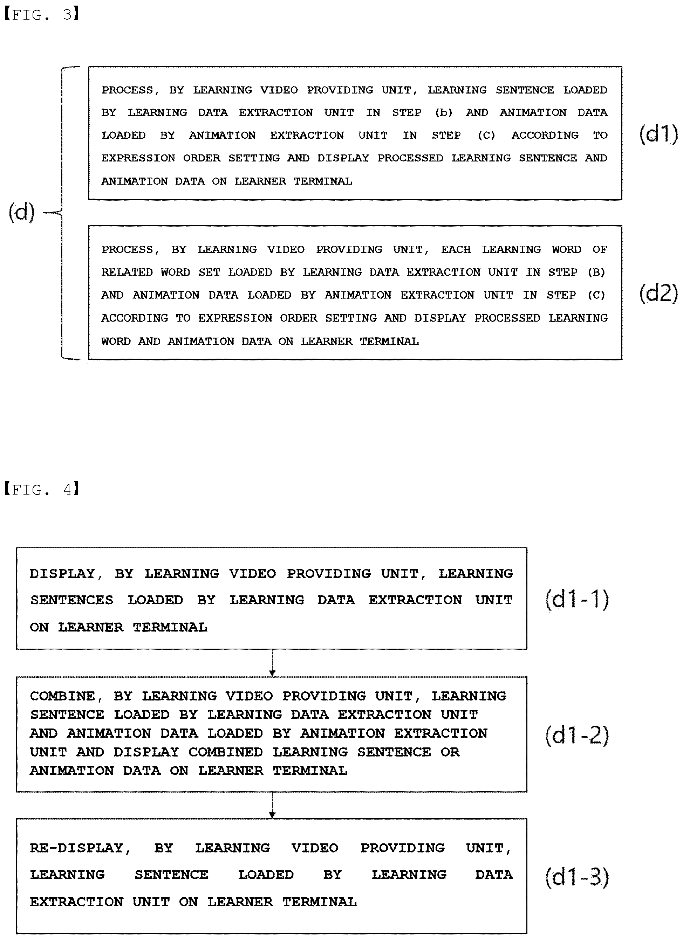

FIG. 3 is a diagram illustrating a classification of step (d) in the method for providing foreign language learning using animation according to the embodiment of the present invention.

As illustrated in FIG. 3, step (d) may be performed in the form of step (d1) or step (d2) depending on the learning mode determined by the learning mode determination unit 200 in step (a).

Step (d1) is performed when the learning mode determined by the learning mode determination unit 200 is the sentence learning mode, and is a process of processing, by the learning video providing unit 500, the learning sentences loaded by the learning data extraction unit 300 in step (b) and the animation data loaded by the animation extraction unit 400 in step (c) according to expression order setting and displaying the processed learning sentences and animation data on the learner terminal 10.

Step (d2) is performed when the learning mode determined by the learning mode determination unit 200 is the word learning mode, and is a process of processing, by the learning video providing unit 500, each learning word of the related word set loaded by the learning data extraction unit 300 in step (b) and the animation data loaded by the animation extraction unit 400 in step (c) according to expression order setting and displaying the processed learning words and animation data on the learner terminal 10.

These steps (d1) and (d2) may be set to sequentially perform a pre-guidance process of displaying the learning sentences or the learning words loaded by the learning data extraction unit 300 on the learner terminal 10, a learning process of combining the learning sentences or the learning words loaded by the learning data extraction unit 300 and the animation data loaded by the animation extraction unit and displaying the combined learning sentences or learning words and the animation data on the learner terminal 10, and a post-guidance process of re-displaying the learning sentences or the learning words loaded by the learning data extraction unit 300 on the learner terminal 10.

Hereinafter, each of the steps (d1) and (d2) will be described in detail.

FIG. 4 is a diagram illustrating a detailed process of step (d1) in the method for providing foreign language learning using animation according to the embodiment of the present invention.

As illustrated in FIG. 4, in the present embodiment, step (d1) may include steps (d1-1) to (d1-3) in detail.

Step (d1-1) is a process of displaying, by the learning video providing unit 500, the learning sentences loaded by the learning data extraction unit 300 on the learner terminal 10.

In other words, the learning video providing unit 500 may first display the learning sentences to be learned on the learner terminal 10 to guide the learner in advance about which learning sentences to learn.

In this case, in this process, the learning sentences may be displayed as text on the learner terminal 10, and voice reading the learning sentences aloud may also be played back together.

Step (d1-2) is a process of combining, by the learning video providing unit 500, the learning sentences loaded by the learning data extraction unit 300 and the animation data loaded by the animation extraction unit 400 and displaying the combined learning sentences or animation data on the learner terminal 10.

This process enables a learner to perform learning in earnest by visually providing the animation data along with the learning sentences, and more details thereof will be described later.

Step (d1-3) is a process of re-displaying, by the learning video providing unit 500, the learning sentences loaded by the learning data extraction unit 300 on the learner terminal 10.

In other words, in this process, after the full-scale learning process in step (d1-2) is completed, the learning sentences that have been learned as in step (d1-1) are displayed on the learner terminal 10 to enable the learner to review them.

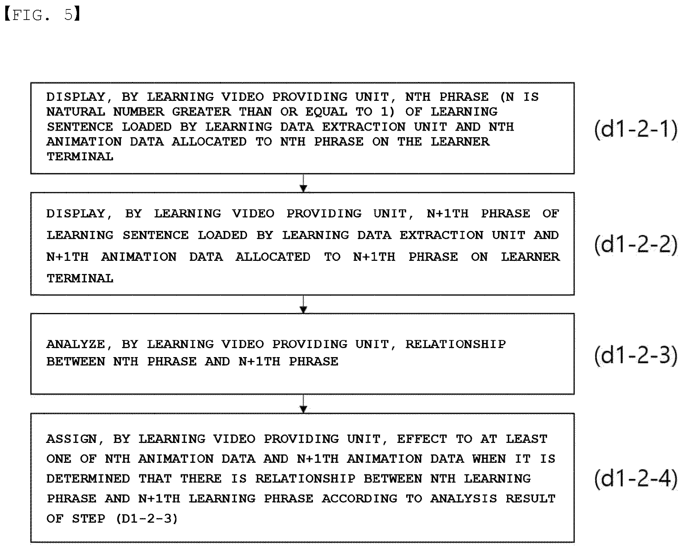

FIG. 5 is a diagram illustrating a detailed process of step (d1-2) in the method for providing foreign language learning using animation according to an embodiment of the present invention.

As illustrated in FIG. 5, step (d1-2) may include steps (d1-2-1) to (d1-2-4) in detail.

Step (d1-2-1) is a process of displaying, by the learning video providing unit 500, an nth phrase (n is a natural number greater than or equal to 1) of the learning sentences loaded by the learning data extraction unit 300 and nth animation data allocated to the nth phrase on the learner terminal 10.

As described above, the learning sentence may be divided into a plurality of phrases, and these may be named an nth phrase in their arrangement order within the sentence.

That is, step (d1-2-1) displays an nth animation data allocated to an nth phrase on the learner terminal 10, along with the nth phrase.

Next, step (d1-2-2) is a process of displaying, by the learning video providing unit 500, an n+1th phrase of the learning sentences loaded by the learning data extraction unit 300 and n+1th animation data allocated to the n+1th phrase on the learner terminal 10.

In this process, after expressing the nth sentence and nth animation data in the above-described step (d1-2-1), the next order, the n+1th sentence, and the n+1th animation data allocated to the n+1th sentence are displayed on the learner terminal 10.

That is, the nth phrase, the nth animation data allocated to the nth phrase, the n+1th phrase, and the n+1th animation data allocated to the n+1th phrase are displayed on the learner terminal 10 together.

Step (d1-2-3) is a process of analyzing, by the learning video providing unit 500, a correlation between the nth phrase and the n+1th phrase.

This process is performed to analyze the correlation between the nth phrase and the n+1th phrase, and when the correlation exists, to assign the corresponding effect to the animation data allocated to each phrase.

In other words, the plurality of different phrases included in one learning sentence may have the correlation that influence each other, and in this case, an effect may be assigned to the animation data of the corresponding phrase.

Step (d1-2-4) is a process of assigning, by the learning video providing unit 500, an effect to at least one of the nth animation data and the n+1th animation data when it is determined that there is the correlation between the nth phrase and the n+1th phrase according to the analysis result of the step (d2-2-3).

This process is performed when the plurality of different phrases included in one learning sentence have the correlation that influence each other in step (d1-2-3), and allows a learner to recognize nuances of each phrase by assigning the effect to the animation data of the corresponding phrase.

The step (d1-2) as described above may sequentially increase n by the number of times that 1 is subtracted from the number of phrases in the learning sentence and may be performed repeatedly.

For example, when the number of phrases in the learning sentence is 4, step (d1-2) may be repeated 3 times.

Hereinafter, the above step (d1) will be described through specific examples.

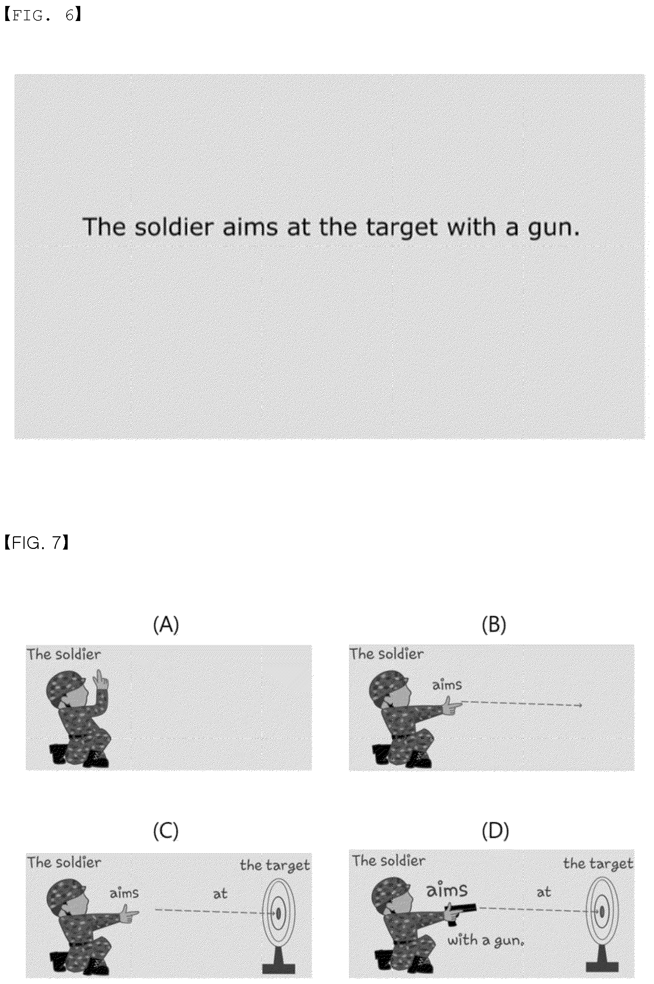

FIG. 6 is a diagram exemplarily illustrating a screen displayed on the learner terminal 10 in steps (d1-1) and (d1-3) in the method for providing foreign language learning using animation according to an embodiment of the present invention, and FIG. 7 is a diagram exemplarily illustrating a screen displayed on the learner terminal 10 in step (d1-2) in the method for providing foreign language learning using animation according to an embodiment of the present invention.

FIGS. 6 and 7 illustrate that the learning sentence displayed on the learner terminal 10 is 'The solider aims at the target with a gun'.

First, as illustrated in FIG. 6, in step (d1-1), the learning sentence 'The solider aims at the target with a gun' is displayed on the learner terminal 10, and the learning sentence is read aloud and played back.

Therefore, in this process, a learner may recognize which learning sentences to learn.

As illustrated in FIG. 7, the full-scale learning process is performed in step (d1-2).

A phrase division setting for the illustrated learning sentence 'The solider aims at the target with a gun' may be semantically divided into a total of four phrases, such as The solider/aims/at the target/with a gun.

Accordingly, as illustrated in FIG. 7(A), 'The solider' corresponding to the first phrase is displayed on the learner terminal 10, and along with this, the animation of the soldier, which is the first animation data, is displayed.

Next, as illustrated in FIG. 7(B), 'aims' corresponding to the second phrase is displayed on the learner terminal 10, and along with this, an animation representing a direction dotted line, which is the second animation data, is displayed.

In this case, the second phrase is a phrase that affects the first phrase, and an effect is assigned to a soldier animation, which is the first animation data, so that it may be converted into an action where a soldier aims in a specific direction.

Next, as illustrated in FIG. 7(C), 'at the target' corresponding to the third phrase is displayed on the learner terminal 10, and along with this, an animation expressing an aiming target, which is third animation data, is displayed at an end portion of the direction dotted line which is the second animation data.

In this case, the third phrase is determined not to be the phrase that affects the first phrase and the second phrase, so no separate effect is assigned to the first animation data and the second animation data.

Next, as illustrated in FIG. 7(D), 'with a gun' corresponding to the fourth phrase is displayed on the learner terminal 10, and along with this, an animation expressing a gun, which is fourth animation data, is displayed at a hand portion of the solder which is the first animation data.

In this case, the fourth phrase is determined not to be the phrase that affects the first phrase to the third phrase, so no separate effect is assigned to the first animation data and the third animation data.

As described above, in the (d1-2) step, sequential animations and effects are displayed for each phrase of the learning sentence, so the learner may intuitively understand the meaning of the sentence and the words included in the sentence at the moment he/she hears the explanation while watching the animation, and at the same time, perform natural memorization.

Next, as illustrated again in FIG. 6, in step (d3-1), the learning sentence 'The solider aims at the target with a gun' is displayed on the learner terminal 10, and the learning sentence is read aloud and played back.

Therefore, in this process, the learner may review the learning sentence and end the learning process for the learning sentence.

Next, step (d2) will be described.

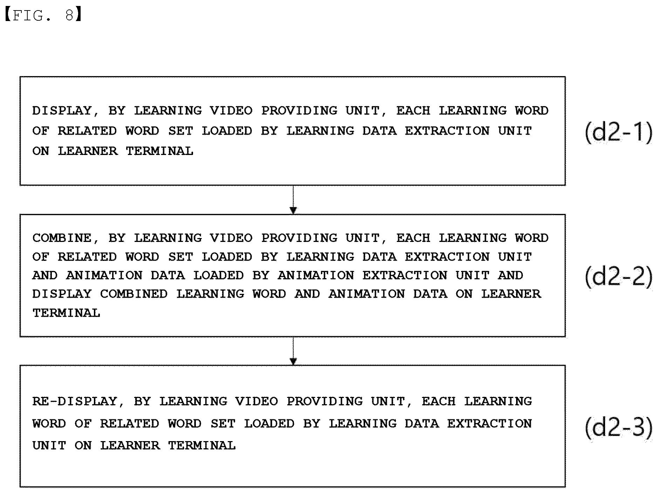

FIG. 8 is a diagram illustrating a detailed process of step (d2) in the method for providing foreign language learning using animation according to an embodiment of the present invention.

As illustrated in FIG. 8, in the present embodiment, step (d2) may include steps (d2-1) to (d2-3) in detail.

Step (d2-1) is a process of displaying, by the learning video providing unit 500, each learning word of the related word set loaded by the learning data extraction unit 300 on the learner terminal 10.

In other words, the learning video providing unit 500 may first display each learning word of the related word set to be learned on the learner terminal 10 to guide the learner in advance about which learning words to learn.

In this case, in this process, the learning words may be displayed as text on the learner terminal 10, and at the same time, voice reading the learning sentences aloud may also be played back together.

Step (d2-2) is a process of combining, by the learning video providing unit 500, each learning word of the related word set loaded by the learning data extraction unit 300 and the animation data loaded by the animation extraction unit 400 and displaying the combined learning words or animation data on the learner terminal 10.

This process enables a learner to perform learning in earnest by visually providing the animation data along with each learning word of the related word set, and more details thereof will be described later.

Step (d2-3) is a process of re-displaying, by the learning video providing unit 500, each learning word of the related word set loaded by the learning data extraction unit 300 on the learner terminal 10.

In other words, in this process, after the full-scale learning process in step (d2-2) is completed, each learning word of the related word set that has been learned as in step (d2-1) are displayed on the learner terminal 10 to enable the learner to review them.

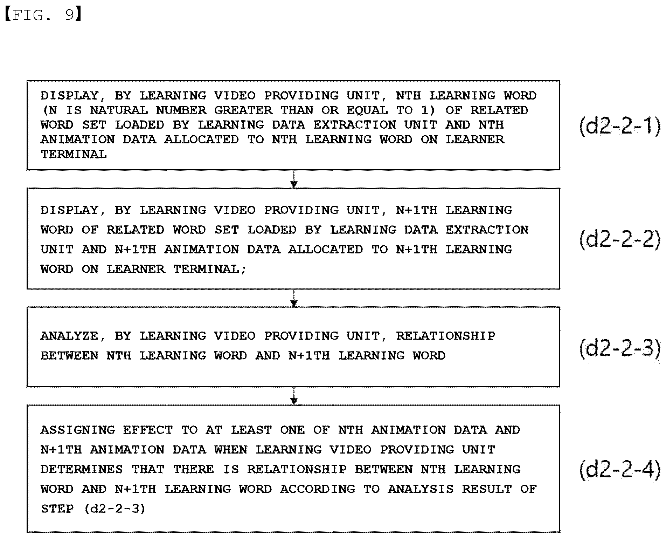

FIG. 9 is a diagram illustrating a detailed process of step (d2-2) in the method for providing foreign language learning using animation according to an embodiment of the present invention.

As illustrated in FIG. 9, step (d2-2) may include steps (d2-2-1) to (d2-2-4) in detail.

Step (d2-2-1) is a process of displaying, by the learning video providing unit 500, an nth learning word (n is a natural number greater than or equal to 1) of the related word set loaded by the learning data extraction unit 300 and the nth animation data allocated to the nth learning word on the learner terminal 10.

As described above, the related word set may include a plurality of learning words that are related to each other, and these may be named the nth learning words in a preset order.

That is, step (d2-2-1) displays the nth animation data allocated to the nth learning word on the learner terminal 10, along with the nth learning word.

Next, step (d2-2-2) is a process of displaying, by the learning video providing unit 500, an n+1th learning word of the related word set loaded by the learning data extraction unit 300 and n+1th animation data allocated to the n+1th learning word on the learner terminal 10.

In this process, after expressing the nth learning word and nth animation data in the above-described step (d2-2-1), the next order, the n+1th sentence, and the n+1th animation data allocated to the n+1th learning word are displayed on the learner terminal 10.

That is, the nth learning word, the nth animation data allocated to the nth learning word, the n+1th learning word, and the n+1th animation data allocated to the n+1th learning word are displayed on the learner terminal 10 together.

Step (d2-2-3) is a process of analyzing, by the learning video providing unit 500, a correlation between the nth learning word and the n+1th learning word.

This process is performed to analyze the correlation between the nth learning word and the n+1th learning word, and when the correlation exists, to assign the corresponding effect to the animation data allocated to each learning word.

In other words, the plurality of different learning words included in one related word set may have the correlation that influence each other, and in this case, an effect may be assigned to the animation data of the corresponding learning word.

Step (d2-2-4) is a process of assigning, by the learning video providing unit 500, an effect to at least one of the nth animation data and the n+1th animation data when it is determined that there is the correlation between the nth learning word and the n+1th learning word according to the analysis result of the step (d2-2-3).

This process is performed when the plurality of different learning words included in one related word set have the correlation that influence each other in step (d2-2-3), and allows a learner to recognize nuances of each learning word by assigning the effect to the animation data of the corresponding phrase.

The step (d2-2) as described above may be performed repeatedly by sequentially increasing n by the number of times 1 is subtracted from the number of learning words constituting the related word set.

For example, when the number of learning words included in the related word set is 4, step (d2-2) may be repeated 3 times.

Hereinafter, the above step (d2) will be described through specific examples.

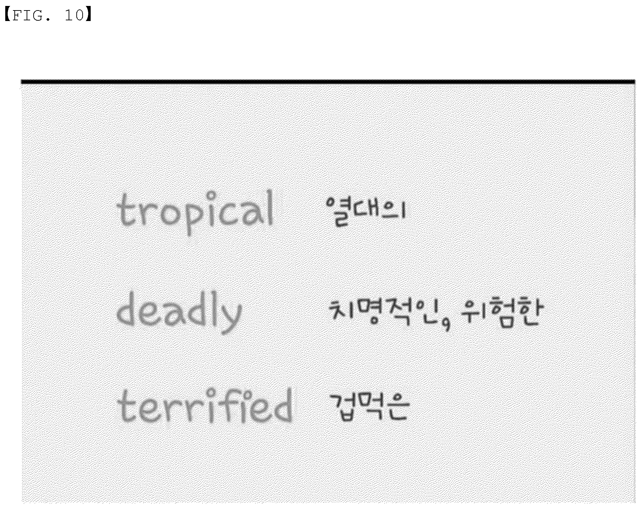

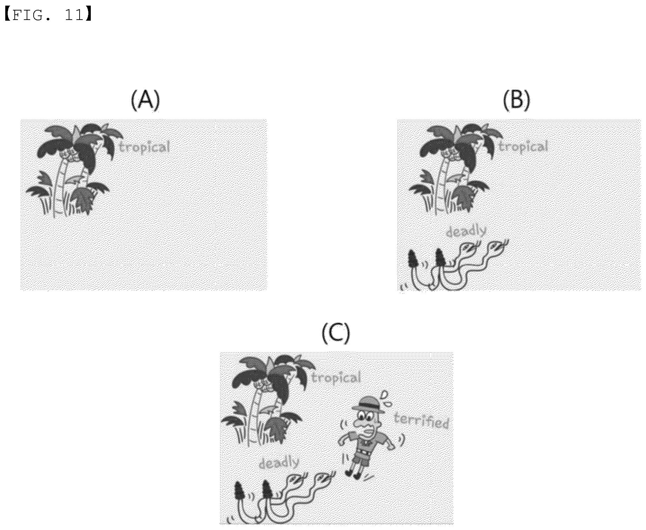

FIG. 10 is a diagram exemplarily illustrating a screen displayed on the learner terminal 10 in steps (d2-1) and (d2-3) in the method for providing foreign language learning using animation according to an embodiment of the present invention, and FIG. 11 is a diagram exemplarily illustrating a screen displayed on the learner terminal 10 in step (d2-2) in the method for providing foreign language learning using animation according to an embodiment of the present invention.

In FIGS. 10 and 11, the related word set displayed on the learner terminal 10 is illustrated as including a total of three learning words, 'tropical', 'deadly', and 'terrified', respectively.

First, as illustrated in FIG. 10, in step (d2-1), each learning word such as 'tropical', 'deadly', and 'terrified' is displayed on the learner terminal 10, and the learning words are read aloud and played back.

Therefore, in this process, a learner may recognize which learning words to learn.

As illustrated in FIG. 11, the full-scale learning process is performed in step (d2-2).

First, as illustrated in FIG. 11(A), 'tropical' corresponding to the first learning word is displayed on the learner terminal 10, and along with this, the first animation data, an animation of a palm tree meaning a tropical rainforest, is displayed.

Next, as illustrated in FIG. 11(B), 'deadly' corresponding to the second learning word is displayed on the learner terminal 10, and along with this, the second animation data, a snake animation signifying fatal danger, is displayed.

In this case, the second learning word is determined not to be a learning word that affects the first learning word, so no separate effect is assigned to the first animation data and the second animation data.

Next, as illustrated in FIG. 11(C), 'terrified' corresponding to the third learning word is displayed on the learner terminal 10, and along with this, the third animation data, an animation representing a frightened person, is displayed.

In this case, the third learning word is determined to be a learning word that affects the second learning word, and thus, an effect is assigned to the snake animation which is the second animation data, so the position may be changed so that the snake moves a certain distance towards the frightened person.

As described above, in step (d2-2), sequential animations and effects are displayed for each learning word in the related word set, so the learner may intuitively understand the meaning of the learning word the moment he/she hears the explanation while watching the animation, and at the same time, perform natural memorization.

Next, as illustrated again in FIG. 10, in step (d3-1), each learning word such as 'tropical', 'deadly', and 'terrified' is displayed on the learner terminal 10, and the learning words are read aloud and played back.

Therefore, in this process, the learner may review the learning words and end the learning process for the learning words.

The animation data illustrated in FIGS. 6 and 7, and FIGS. 10 and 11 are in the form in which the completed image is immediately displayed on the learner terminal 10. As an example, the animation data may also be expressed in a way that lines are expressed continuously for a specific time.

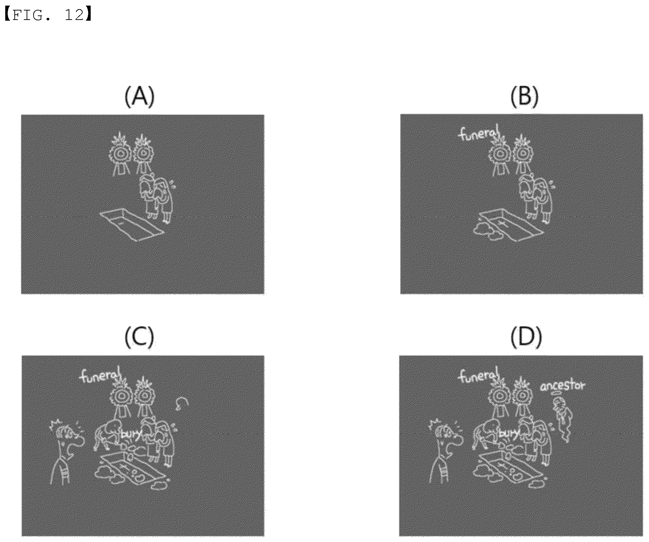

FIG. 12 is a diagram illustrating another example of the screen displayed on the learner terminal in step (d2-2) in the method for providing foreign language learning using animation according to the embodiment of the present invention.

FIG. 12 illustrates a case where the learning mode is a word learning mode, and illustrates that the related word set includes learning words 'funeral', 'bury', and 'ancestor'.

As illustrated in FIGS. 12 (A), (B), (C), and (D), in this example, it can be seen that the animation data of each learning word is not displayed immediately in its completed form, but continuously expressed in lines for a certain period of time and expressed through a sketch method.

In other words, animation data may be displayed on the learner terminal 10 through various methods.

Meanwhile, all major languages have patterns that are commonly used in everyday life. In other words, it is impossible to memorize all sentences that are impossible to count, but there are only a few hundred sentence patterns commonly used in major languages.

When a learner accurately memorizes hundreds of sentence patterns, the acquisition of the foreign language that the learner is learning will be much faster through the process of using the foreign language in daily life and the additional learning process that unfolds thereafter.

In conclusion, when a learner memorizes sentence patterns accurately in learning foreign language sentences, since speaking and writing may become much easier, the memorization of the sentence patterns in foreign languages to be learned may dramatically increase learning efficiency.

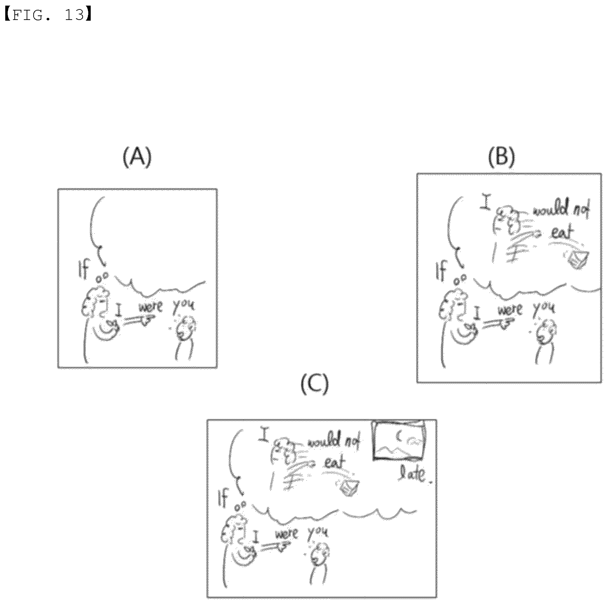

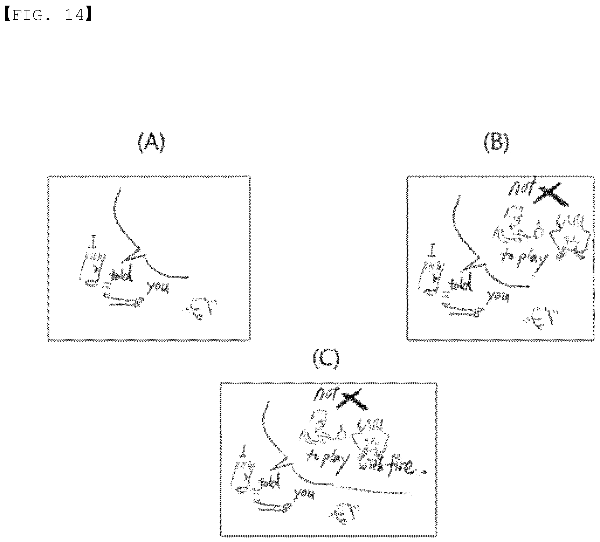

FIGS. 13 and 14 illustrate examples of screens displayed on the learner terminal for memorizing such sentence patterns, respectively.

FIG. 13 is an example for learning the sentence pattern of 'If I were you, I would ~', as illustrated in FIGS. 13 (A), (B), and (C), it can be seen that the learning sentence of 'If I were you I would not eat late' and its animation data are displayed continuously.

In addition, FIG. 14 is an example for learning the sentence pattern of 'I told you not to ~', as illustrated in FIGS. 13 (A), (B), and (C), it can be seen that the learning sentence of 'I told you not to play with fire' and its animation data are displayed continuously.

Meanwhile, in the above-described steps (b1-2) and (b2-2), after the phrases, the learning word, and the animation data of the learning sentence corresponding to the nth are displayed, a preset section time that determines the time interval until the phrase, the learning words, and animation data of the learning sentence corresponding to the n+1th are displayed may be set in advance.

In other words, after the phrases, the learning words, and the animation data of the learning sentence corresponding to the nth are displayed, the phrases, the learning words, and the animation data of the learning sentence corresponding to the n+1th may be displayed after the preset section time has elapsed. In this case, the section time may be set according to various standards.

To describe in more detail, each phrase and its animation data pair, and the learning word and the animation data pair corresponding thereto may each be set to have a unique section time, which may be set in consideration of its meaning.

For example, words such as 'deadly' and its snake animation have a very dangerous and urgent feeling, so they may be set to have a very short section time, and words such as 'tropical' and its palm tree animation have a tropical, leisurely feel, so they may be set to have relatively long section times.

Accordingly, when the 'tropical', 'deadly' , and 'terrified' are expressed sequentially, while the learner is feeling relaxed in the 'tropical' part, since 'terrified' is expressed immediately after 'deadly' is expressed, and a sudden change in mood can be felt, the learner may increase the learning effect by feeling the nuances of each word more effectively.

The section time may be set to a plurality of grades, and the section time of the preset grade may be set for each phrase and its corresponding animation data pair and for the learning word and its corresponding animation data pair.

For example, the section time may be classified into an mth grade (m is a natural number of 1 or more). When m is 1, it may be set to have the longest display time, and m may be set to have a short display time as its number increases.

Therefore, the section time of the mth grade may be assigned to each phrase and its corresponding animation data pair, and the learning word and its corresponding animation data pair, and the learning video providing unit 500 may display the learning sentences or the learning words and the animation data on the learner terminal 10 by considering the grade of the section time.

In addition, the learner may set the section time to have the preset delay through the learner terminal 10 by considering his/her own language learning level.

In this case, the section time for each grade may be shorter or longer overall, so the learner may perform learning appropriate for his/her level.

In this case, different weights may be applied to each grade of section time, and in this case, the same delay multiplier may not be applied to each grade.

The learner may select one of a plurality of weight curves set differently in advance through the learner terminal 10, and for each grade of the section time, the delay multiplier may be determined according to the selected weight curve.

Meanwhile, in each of the examples described above, a separate emphasis expression may be made for key parts corresponding to the animation data among the elements included in the learning words and learning sentences.

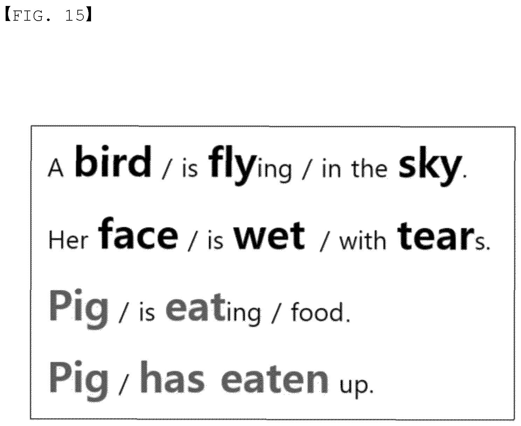

For example, when the learning sentences are 'A bird/is flying/in the sky.', 'Her face/is wet/with tears.', 'Pig/is eating/food', 'Pig/has eaten up', in each of these sentences, parts directly corresponding to the animation displayed together may be highlighted, as illustrated in FIG. 15.

The emphasis expression may be implemented in various ways, such as adjusting a font size for an emphasized part, displaying it in bold, or displaying color coding.

In addition, among the elements included in learning words and learning sentences, for elements with a level of importance higher than the preset standard level of importance, a method of repeatedly highlighting corresponding animation data and corresponding elements may be applied.

For example, a method of repeatedly disappearing and reappearing for specific phrases with an importance greater than the preset standard importance in a learning sentence and the corresponding animation data, a method of repeating the expression of increasing and decreasing size or expressing blinking by repeatedly switching to multiple colors, or the like may be applied.

In this way, the present invention may clearly emphasize vocabulary to be learned (words/idioms/expressions) within the animation, so even if not only vocabulary to be memorized but also commentary languages are transmitted in the same foreign language, a learner may recognize and understand the vocabulary.

The strength of this method is that by emphasizing key vocabulary within the animation, even learners who lack basic vocabulary skills can easily understand and memorize vocabulary while maintaining interest in learning activities.

In addition, as the number of foreign language vocabulary memorized by a learner in this way increases, the understanding of not only the vocabulary to be learned but also the vocabulary used in the commentary may gradually develop.

In addition, since this method may be applied not only to the core vocabulary to be learned, but also to the entire explanatory sentence language in the foreign language to be learned, there is the advantage of providing much more exposure to the language compared to native language-based commentary.

For example, as in the above-described sentence 'Pig/has eaten up.', the learner watches several very short and interesting episodes containing the have + pp structure in succession, and then solves interestingly structured practice problems to learn English perfect tense grammar more naturally.

In other words, the present invention may be of great help in naturally learning difficult grammatical parts of a foreign language.

As described above, the preferred embodiments according to the present invention have been reviewed, and the fact that the present invention can be embodied in other specific forms without departing from the spirit or scope in addition to the above-described embodiments is obvious to those skilled in the art. Therefore, the embodiments described above are to be regarded as illustrative rather than restrictive, and thus the present invention is not limited to the above description, but may be modified within the scope of the appended claims and their equivalents.

### [Description of reference numerals]

10: Learner terminal
100: Database
200: Learning mode determination unit
300: Learning data extraction unit
400: Animation extraction unit
500: Learning video providing unit

## Claims

1. A system for providing foreign language learning using animation, comprising:
a data storage unit that stores learning data including learning sentences and learning words for a foreign language and animation data corresponding to the learning data;
a learning mode determination unit that determines which one of a sentence learning mode or a word learning mode a current learning mode selected by a learner terminal owned by a learner is;
a learning data extraction unit that selects and loads the learning sentences or the learning words from the data storage unit to correspond to learning setting of the learning mode determined by the learning mode determination unit;
an animation extraction unit that selects and loads animation data corresponding to the learning sentences or the learning words loaded by the learning data extraction unit; and
a learning video providing unit that displays the learning sentences or the learning words loaded by the learning data extraction unit and the animation data loaded by the animation extraction unit on the learner terminal according to preset expression setting.

2. The system of claim 1, wherein the learning setting of the sentence learning mode includes at least one of:
phrase division setting that provides a standard for dividing the learning sentences into a plurality of phrases having a semantic unit;
expression order setting that determines an expression order of a plurality of phrases divided by the phrase division setting;
animation setting that allocates animation data corresponding to each of the plurality of divided phrases; and
effect setting that determines an effect to be assigned to the animation data allocated to each of the plurality of phrases according to the animation setting.

3. The system of claim 1, wherein the learning setting of the word learning mode includes at least one of:
related word setting that sets a related word set that is a combination of random learning words and other learning words with a preset degree of relationship;
expression order setting that determines an expression order of learning words included in the related word set;
animation setting that allocates animation data corresponding to each learning word included in the related word set; and
effect setting that determine an effect to be assigned to the animation data allocated to each learning word according to the animation setting.

4. The system of claim 1, wherein the expression setting is set to sequentially perform:
a pre-guidance process of displaying the learning sentences or the learning words loaded by the learning data extraction unit on the learner terminal;
a learning process of combining the learning sentences or the learning words loaded by the learning data extraction unit and the animation data loaded by the animation extraction unit and displaying the combined learning sentences or learning words on the learner terminal; and
a post-guidance process of re-displaying the learning sentences or the learning words loaded by the learning data extraction unit on the learner terminal.

5. A method for providing foreign language learning using animation, comprising:
step (a) of determining, by a learning mode determination unit, which one of a sentence learning mode or a word learning mode a current learning mode selected by a learner terminal owned by a learner is;
step (b) of selecting and loading, by a learning data extraction unit, the learning sentences or the learning words from the data storage unit to correspond to learning setting of the learning mode determined by the learning mode determination unit in the step (a);
step (c) of selecting and loading, by an animation extraction unit, animation data corresponding to the learning sentences or the learning words loaded by the learning data extraction unit in the step (b); and
step (d) of processing, by the learning video providing unit, the learning sentences or the learning words loaded by the learning data extraction unit in the step (b) and the animation data loaded by the animation extraction unit in the step (c) according to preset expression setting and displaying the processed learning sentences or learning words and animation data on the learner terminal.

6. The method of claim 5, wherein the learning setting of the sentence learning mode includes at least one of:
phrase division setting that provides a standard for dividing the learning sentences into a plurality of phrases having a semantic unit;
expression order setting that determines an expression order of a plurality of phrases divided by the phrase division setting;
animation setting that allocates animation data corresponding to each of the plurality of divided phrases; and
effect setting that determines an effect to be assigned to the animation data allocated to each of the plurality of phrases according to the animation setting.

7. The method of claim 6, wherein when the learning mode determined by the learning mode determination unit in the step (a) is a sentence learning mode,
in step (b), the learning data extraction unit selects and loads the learning sentences corresponding to a preset learning order from the data storage unit, and
the step (d) is performed in a form of step (d1) of processing, by a learning video providing unit, the learning sentences loaded by the learning data extraction unit in the step (b) and the animation data loaded by the animation extraction unit in the step (c) according to the expression order setting and displaying the processed learning sentences and animation data on the learner terminal.

8. The method of claim 7, wherein the step (d1) includes:
step (d1-1) of displaying, by the learning video providing unit, the learning sentences loaded by the learning data extraction unit on the learner terminal;
step (d1-2) of combining, by the learning video providing unit, the learning sentences loaded by the learning data extraction unit and the animation data loaded by the animation extraction unit and displaying the combined learning sentences or animation data on the learner terminal; and
step (d1-3) of re-displaying, by the learning video providing unit, the learning sentences loaded by the learning data extraction unit on the learner terminal.

9. The method of claim 8, wherein the step (d1-2) includes:
step (d1-2-1) of displaying, by the learning video providing unit, an nth phrase (n is a natural number greater than or equal to 1) of the learning sentences loaded by the learning data extraction unit and nth animation data allocated to the nth phrase on the learner terminal;
step (d1-2-2) of displaying, by the learning video providing unit, an n+1th phrase of the learning sentences loaded by the learning data extraction unit and n+1th animation data allocated to the n+1th phrase on the learner terminal;
step (d1-2-3) of analyzing, by the learning video providing unit, a correlation between the nth phrase and the n+1th phrase; and
step (d1-2-4) of assigning, by the learning video providing unit, an effect to at least one of the nth animation data and the n+1th animation data when it is determined that there is the correlation between the nth learning phrase and the n+1th learning phrase according to the analysis result of the step (d2-2-3), and
the step (d1-2) sequentially increases n by the number of times that 1 is subtracted from the number of phrases in the learning sentence and is performed repeatedly.

10. The method of claim 5, wherein the learning setting of the word learning mode includes at least one of:
related word setting that sets a related word set that is a combination of random learning words and other learning words with a preset degree of relationship;
expression order setting that determines an expression order of learning words included in the related word set;
animation setting that allocates animation data corresponding to each learning word included in the related word set; and
effect setting that determine an effect to be assigned to the animation data allocated to each learning word according to the animation setting.

11. The method of claim 10, wherein when the learning mode determined by the learning mode determination unit in the step (a) is a word learning mode,
in step (b), the learning data extraction unit selects and loads the related word set corresponding to a preset learning order from the data storage unit, and
the step (d) is performed in a form of step (d2) of processing, by the learning video providing unit, each learning word of the related word set loaded by the learning data extraction unit in the step (b) and the animation data loaded by the animation extraction unit in the step (c) according to the expression order setting and displaying the processed learning word and animation data on the learner terminal.

12. The method of claim 11, wherein the step (d2) includes:
step (d2-1) of displaying, by the learning video providing unit, each learning word of the related word set loaded by the learning data extraction unit on the learner terminal;
step (d2-2) of combining, by the learning video providing unit, each learning word of the related word set loaded by the learning data extraction unit and the animation data loaded by the animation extraction unit and displaying the combined learning word and animation data on the learner terminal; and
step (d2-3) of re-displaying, by the learning video providing unit, each learning word of the related word set loaded by the learning data extraction unit on the learner terminal.

13. The method of claim 12, wherein the step (d2-2) includes:
step (d2-2-1) of displaying, by the learning video providing unit, an nth learning word (n is a natural number greater than or equal to 1) of the related word set loaded by the learning data extraction unit and nth animation data allocated to the nth learning word on the learner terminal;
step (d2-2-2) of displaying, by the learning video providing unit, an n+1th learning word of the related word set loaded by the learning data extraction unit and n+1th animation data allocated to the n+1th learning word on the learner terminal;
step (d2-2-3) of analyzing, by the learning video providing unit, a correlation between the nth learning word and the n+1th learning word; and
step (d2-2-4) of assigning an effect to at least one of the nth animation data and the n+1th animation data when the learning video providing unit determines that there is the correlation between the nth learning word and the n+1th learning word according to the analysis result of the step (d2-2-3), and
the step (d2-2) sequentially increases n by the number of times that 1 is subtracted from the number of learning words constituting the related word set and is performed repeatedly.
